# EUROPEAN PATENT APPLICATION

(11) **EP 2 781 316 A1**
(43) Date of publication of application: **24.09.2014**
(21) Application number: 14160270.6
(22) Date of filing: 17.03.2014
(51) Int. Cl.: B25J 11/00

(54) **Robot device**

(30) Priority: 19.03.2013 JP 2013056580
(71) Applicant: Kabushiki Kaisha Yaskawa Denki, Kitakyushu-shi, Fukuoka 806-0004 (JP)
(72) Inventor: Ogasawara, Shinji, Kitakyushu-shi, Fukuoka 806-0004 (JP); Okawa, Ken, Kitakyushu-shi, Fukuoka 806-0004 (JP); Harada, Toshiyuki, Kitakyushu-shi, Fukuoka 806-0004 (JP); Shiota, Akihiro, Kitakyushu-shi, Fukuoka 806-0004 (JP); Ikeda, Toshiaki, Kitakyushu-shi, Fukuoka 806-0004 (JP)
(74) Representative: Viering, Jentschura & Partner Patent- und Rechtsanwälte

(57) **Abstract**

A robot device (1) is provided, which includes an arm body (10) having a screw-fastening mechanism (30), a detector (50, 51b, 52b) for detecting a force applied to the arm body (10), and a controller (50, 51a, 52a) for controlling the arm body (10) based on a detection result of the detector (50, 51b, 52b) at the time of a screw-fastening operation by the screw-fastening mechanism (30).

## Description

### Technical Field

The present disclosure relates to a robot device.

### Background of the Invention

In recent years, screw-fastening operation is conducted using a robot device when assembling a product. For example, JP07-214435A discloses a robot device having a screw-fastening mechanism provided at a tip end of an articulated arm body. The robot device disclosed in JP07-214435A detects a force acting to the screw-fastening mechanism at the time of a screw-fastening operation by a force sensor attached to the screw-fastening mechanism, and controls the posture of the screw-fastening mechanism.

The screw-fastening mechanism transmits a torque to a screw via a spindle unit. The spindle unit has a function to perform a telescopic movement in an axial direction of the screw to compensate a positional offset in the axial direction of the screw between the screw-fastening mechanism and the screw.

In the field of the robot device which performs such screw-fastening operation, performing the screw-fastening operation with a simple configuration has been demanded.

### Summary of the Invention

The present disclosure provides a robot device, which can perform a screw-fastening operation with a simple configuration.

According to one aspect of the present disclosure, a robot device is provided, which includes an arm body having a screw-fastening mechanism, a detector for detecting a force applied to the arm body, and a controller for controlling the arm body based on a detection result of the detector at the time of a screw-fastening operation by the screw-fastening mechanism.

According to another aspect of the present disclosure, a robot device is provided, which includes an arm body for performing a screw-fastening operation, a detector for detecting a force applied to the arm body, and a controller for controlling the arm body based on a detection result of the detector at the time of the screw-fastening operation.

### Effect of the Invention

According to the present disclosure, the screw-fastening operation can be performed with the simple configuration.

### Brief Description of the Drawings

The present disclosure is illustrated by way of example and not by way of limitation in the figures of the accompanying drawings, in which the like reference numerals indicate like elements and in which:
Fig. 1 is a side view illustrating a schematic configuration of a robot device according to one embodiment;
Fig. 2 is a block diagram illustrating a function and a configuration of a controller of Fig. 1; and
Fig. 3 is a flowchart illustrating processing executed by the controller at the time of a screw-fastening operation.

### Detailed Description

Hereinafter, one embodiment of the present disclosure is described referring to the accompanying drawings. Note that like reference numerals are given to like elements to omit redundant explanation.

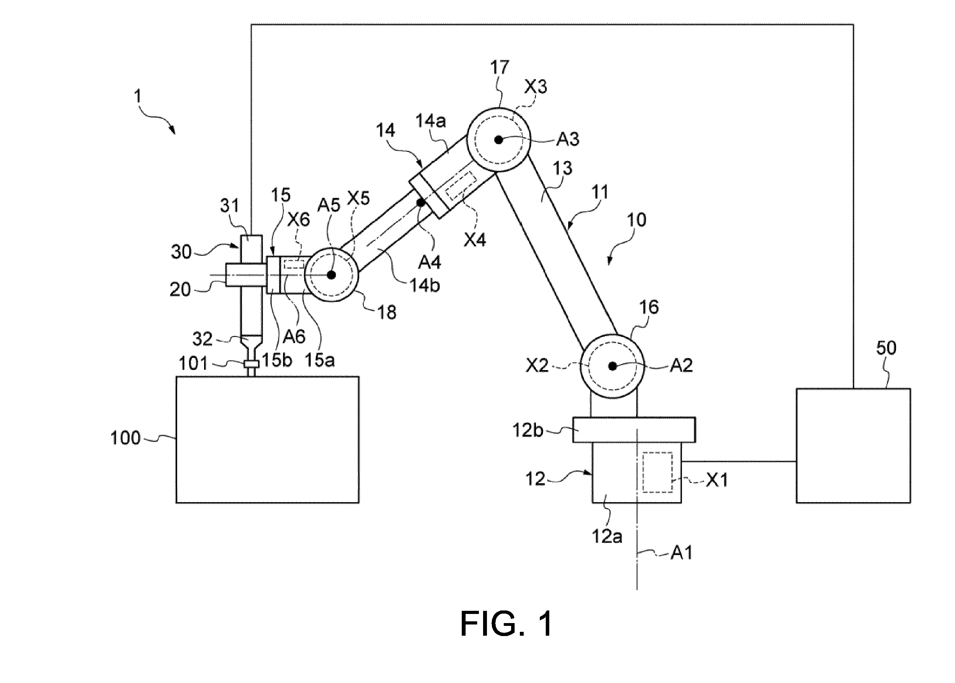

As illustrated in Fig. 1, a robot device 1 includes a robot arm 10, a screw-fastening mechanism 30, and a controller 50. The robot arm 10 includes an articulated arm body 11, and a holder 20 attached to a tip end of the arm body 11. The arm body 11 includes a base part 12, a lower arm part 13, a forearm part 14, and a wrist part 15. The arm body 11 further includes joints 16, 17 and 18. The joints 16-18 sequentially connect the lower arm part 13, the forearm part 14, and the wrist part 15 in series from the base part 12.

The base 12 has a pedestal 12a installed on a floor, and a swivel platform 12b provided onto the pedestal 12a. The pedestal 12a has therein a motor X1 for turning the swivel platform 12b about a vertical axis A1 (S-axis).

The joint 16 (L-axis joint) couples the lower arm part 13 with an upper part of the swivel platform 12b. The joint 16 has therein a motor X2 for pivoting the lower arm part 13 about a horizontal axis A2 (L-axis). That is, the joint 16 pivots the lower arm part 13 connected therewith at a tip-end side (free-end side). The joint (U-axis joint) 17 couples the forearm part 14 to the lower arm part 13. The joint 17 has therein a motor X3 for pivoting the forearm part 14 about an axis A3 (U-axis) which is parallel to the axis A2. That is, the joint 17 pivots the forearm part 14 which is connected to a tip-end side (free-end side) of the joint 17. The joint 18 (B-axis joint) couples the wrist part 15 to the forearm part 14. The joint 18 has therein a motor X5 for pivoting the wrist part 15 about an axis A5 (B-axis) perpendicular to a center axis A4 of the forearm part 14.

The forearm part 14 has forearm links 14a and 14b which are coupled to each other in series. The forearm link 14a on the joint 17 side has therein a motor X4 for rotating or twisting the forearm link 14b on the joint 18 side about the center axis A4 (R-axis) of the forearm part 14.

The wrist part 15 has a wrist link 15a coupled to the joint 18, and a mounting flange 15b coupled to a tip-end side (free-end side) of the wrist link 15a. The wrist link 15a has therein a motor X6 for rotating or twisting the mounting flange 15b about a center axis A6 (T-axis) of the wrist part 15. The holder 20 which can hold one of various tools or end effectors for causing the robot arm 10 to perform a desired task is attached to the mounting flange 15b. In this embodiment, the holder 20 holds a screw-fastening mechanism 30 for performing a screw-fastening operation. Note that a gear-reduction mechanism, an angle sensor and the like may also be provided to each of the motors X1-X6. Note that the arrangement of the motors X1-X6 is merely an example and is not intended to be limited to the arrangement described above.

The screw-fastening mechanism 30 includes a driver 31 and a bit 32. The driver 31 drives the bit 32 to rotate. The bit 32 engages with the head of the screw 101 which is to be threadedly fitted into a workpiece 100, and then rotates the screw 101. Note that the screw 101 may be fitted into any other objects, without limited to the workpiece 100. Further, note that, in the screw-fastening mechanism 30 of this embodiment, the bit 32 is directly attached to the driver 31, and the mechanism 30 does not have any spindle unit which performs a telescopic movement in the axial direction of the screw 101. Moreover, note that, although the screw is particularly illustrated herein, the screw may be replaced with, for example, a bolt, without any limitation.

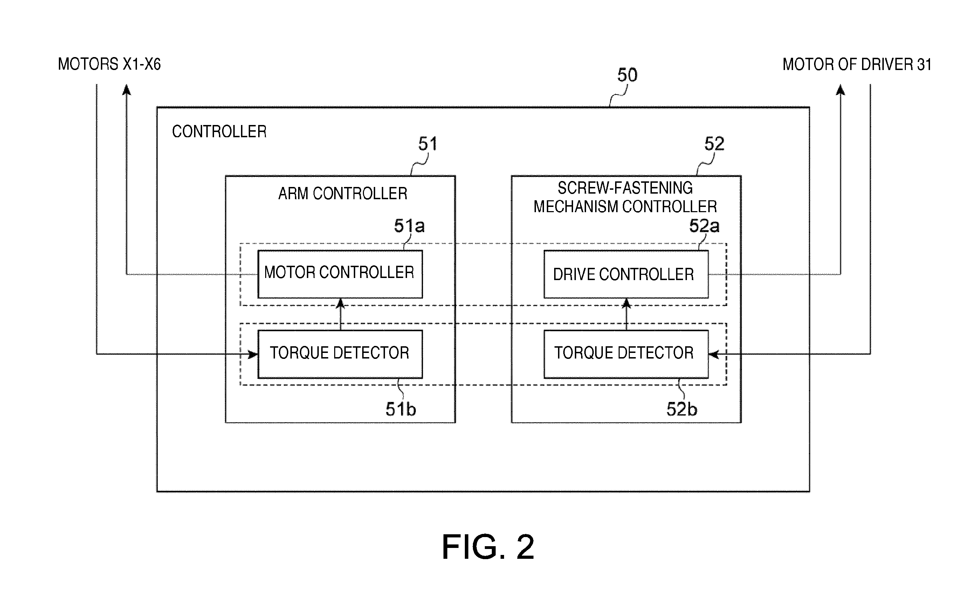

The controller 50 is connected with the robot arm 10 and the screw-fastening mechanism 30. The controller 50 controls the robot arm 10 and the screw-fastening mechanism 30 to cause them to perform the screw-fastening operation. In more detail, the controller 50 includes, as illustrated in Fig. 2, an arm controller 51 and a screw-fastening mechanism controller 52.

The arm controller 51 includes a motor controller 51a (controller) and a torque detector 51b (detector). The motor controller 51a controls the motors X1-X6 provided to the robot arm 10 to operate the screw-fastening mechanism 30 into a predetermined position and a predetermined posture. In addition, the motor controller 51a controls the robot arm 10 so that, at the time of fastening the screw 101 by the screw-fastening mechanism 30, the screw-fastening mechanism 30 is pressed against the workpiece 100 according to the fastening of the screw 101. When pressing the screw-fastening mechanism 30 against the workpiece 100, the motor controller 51a controls the robot arm 10 so that the pressing force does not exceed a predetermined value based on a detection result by the torque detector 51b (a forces applied to the robot arm 10).

Further, the motor controller 51a can acquire a tip-end position of the screw-fastening mechanism 30 based on control values or the like of the motors X1-X6 when controlling the robot arm 10. That is, the motor controller 51a can acquire the position of the head of the screw 101 which has been fastened.

The torque detector 51b detects torque values when the motor controller 51a controls the motors X1-X6 to detect the forces applied to the robot arm 10. Here, if the forces applied to the robot arm 10 become larger, the torque values when controlling the motors X1-X6 also become larger because the robot arm 10 needs to be moved against the force. Therefore, the forces applied to the robot arm 10 can be detected based on the torque values of the motors X1-X6. The torque detector 51b outputs the detected forces applied to the robot arm 10 to the motor controller 51a.

The screw-fastening mechanism controller 52 includes a drive controller 52a and a torque detector 52b. The drive controller 52a controls a motor of the driver 31 of the screw-fastening mechanism 30 to rotate the bit 32. Thus, the screw 101 is fastened. The drive controller 52a stops the drive (rotation) of the bit 32 if a torque value when the drive controller 52a controls the motor of the driver 31 exceeding a predetermined value is detected by the torque detector 52b.

The torque detector 52b detects the torque value when the drive controller 52a controls the motor provided to the driver 31. This torque value indicates a force applied to the bit 32. Here, if a load applied to the bit 32 becomes larger at the time of the screw-fastening operation, the torque value when controlling the motor of the driver 31 also becomes larger because the bit 32 needs to be rotated against the load. Examples of the case where the load applied to the bit 32 becomes larger include a case where the screw 101 is fully fastened and the rotation of the screw 101 is stopped, or a case where the rotation of the screw 101 is stopped in the middle of the fastening due to the screw 101 biting aslant to a threaded hole.

Therefore, the stop of the rotation of the screw 101 can be detected based on the detection result of the torque detector 52b. The torque detector 52b determines whether the detected torque value exceeds the predetermined value. The predetermined value refers to a torque value corresponding to the load applied to the bit 32 when the rotation of the screw 101 is stopped. The torque detector 52b outputs to the drive controller 52a a notification which indicates that the torque value exceeds the predetermined value, if the detected torque value exceeds the predetermined value.

Note that the arm controller 51 and the screw-fastening mechanism controller 52 operate at the same control cycle. That is, the torque detector 51b and the torque detector 52b acquire the torque values of the motors at the same timing, and the motor controller 51a and the drive controller 52a control by outputting instructions to the respective motors at the same timing. That is, the controller 50 can control the motors X1-X6 of the robot arm 10 and the motor of the driver 31 in a synchronized manner.

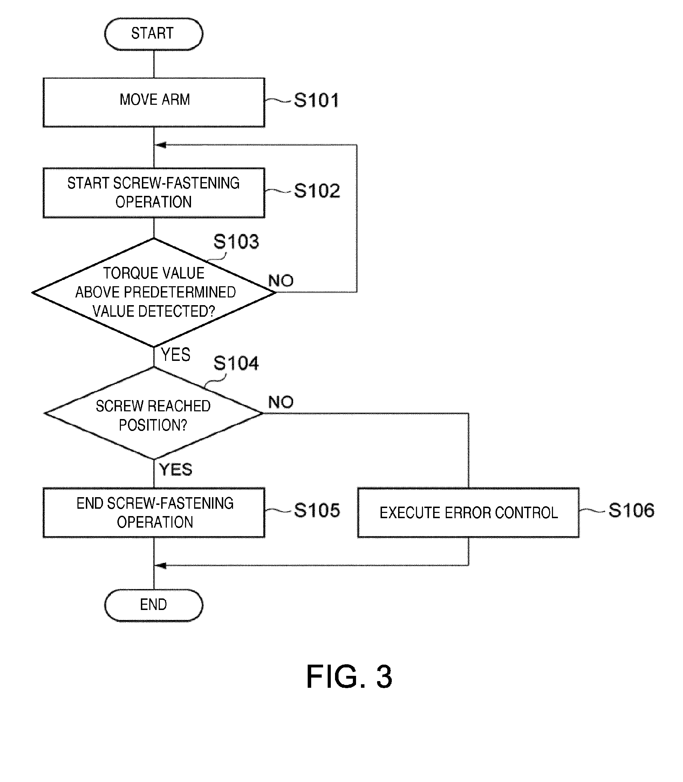

Next, a flow of processing of the controller 50 for fastening the screw 101 using the robot arm 10 and the screw-fastening mechanism 30 will be described. As illustrated in Fig. 3, the motor controller 51a of the arm controller 51 controls the motors X1-X6 to move the robot arm 10 to a fastening position of the screw 101 (Step S101). Note that, before moving the robot arm 10 to the fastening position of the screw 101, the robot arm 10 holds the screw-fastening mechanism 30 by the holder 20, and the screw 101 is then held at the tip end of the bit 32. The holding of the screw 101 may include, but not limited to, holding by the bit which is magnetized, for example.

Next, the drive controller 52a of the screw-fastening mechanism controller 52 controls the driver 31 of the screw-fastening mechanism 30 to rotate the bit 32 to perform the screw-fastening operation (Step S102). Here, the motor controller 51a of the arm controller 51 controls the motors X1-X6 to press the screw-fastening mechanism 30 against the workpiece 100 according to the fastening of the screw 101. Further, when the motor controller 51a presses the screw-fastening mechanism 30 against the workpiece 100, it controls the robot arm 10 based on the detection results by the torque detector 51b so that the pressing force does not exceed the predetermined value.

Next, the torque detector 52b of the screw-fastening mechanism controller 52 detects the torque value when the drive controller 52a controls the motor provided to the driver 31, and then determines whether the torque value exceeds the predetermined value (Step S103). When the torque value does not exceed the predetermined value (Step S103: NO), the motor controller 51a of the arm controller 51 and the drive controller 52a of the screw-fastening mechanism controller 52 perform the processing of Step S102 described above. On the other hand, when the torque value is above the predetermined value (Step S103: YES), the motor controller 51a of the arm controller 51 calculates the position of the head of the screw 101 which has been fastened, based on the control values and the like of the motors X1-X6. Then, the motor controller 51a determines whether the screw-fastening operation has been completed in a normal fashion, and the position of the head of the screw 101 has reached a predetermined fastening completed position (Step S 104).

When the position of the head of the screw 101 reached the fastening completed position (Step S104: YES), the drive controller 52a of the screw-fastening mechanism controller 52 stops the drive of the bit 32, and the motor controller 51a of the arm controller 51 then resumes the robot arm 10 back to a preset position to end the screw-fastening operation (Step S105). On the other hand, when the head of the screw 101 has not reached the fastening completed position (Step S104: NO), the motor controller 51a of the arm controller 51 and the drive controller 52a of the screw-fastening mechanism controller 52 control the robot arm 10 and the screw-fastening mechanism 30, respectively, to execute a predetermined error control associated with a failure of the screw-fastening operation, such as loosening and extracting the screw 101 (Step S 106).

This embodiment is constituted as described above, and at the time of screw-fastening operation, the motor controller 51a of the arm controller 51 controls the robot arm 10 so that the pressing force of the screw 101 applied by the screw-fastening mechanism 30 does not exceed the predetermined value based on the detection results by the torque detector 51b. Thus, the screw-fastening operation can be performed by the control of the robot arm 10 so that the pressing force of the screw 101 by the screw-fastening mechanism 30 does not exceed the predetermined value. Therefore, the screw-fastening mechanism 30 becomes unnecessary to be provided with, for example, a conventional spindle unit which performs a telescopic movement in the axial direction of the screw 101 and, thus, the configuration of the robot device 1 can be simplified.

Further, since it is not necessary to provide the screw-fastening mechanism 30 with the spindle unit which performs the telescopic movement in the axial direction of the screw 101, the robot arm 10 can acquire the tip-end position of the screw-fastening mechanism 30 (or the position of the head of the screw 101). Here, if the spindle unit is provided to the screw-fastening mechanism 30, since the tip-end position of the screw-fastening mechanism 30 changes with the telescopic movement of the spindle unit, the tip-end position of the screw-fastening mechanism 30 cannot be acquired only based on the state of the robot arm 10 (that is, postures, positions, and angles of the arm parts). On the other hand, in the robot device 1 according to this embodiment, since the tip-end position of the screw-fastening mechanism 30 can be acquired, when a large load is applied to the bit 32 and the rotation of the bit 32 stops, the robot device 1 can easily acquire whether the fastening operation of the screw 101 has been completed in the normal fashion, based on the tip-end position of the screw-fastening mechanism 30. For this reason, for example, a sensor for detecting whether the screw 101 has been fastened in the normal fashion becomes unnecessary and, thus, the configuration of the robot device 1 can be further simplified.

The screw-fastening mechanism 30 is attached to the robot arm 10 by being held by the holder 20. Thus, by enabling attachment and detachment of the screw-fastening mechanism 30 to/from the robot arm 10, any tasks other than the screw-fastening operation can be performed using the robot arm 10 and, thus, the versatility of the robot arm 10 can be improved. Further, the controller 50 may detect whether the holder 20 holds the screw-fastening mechanism 30, the motor of the driver 31 may be controlled synchronized with the motors X1-X6 while the screw-fastening mechanism 30 being held, and only the motors X1-X6 may be controlled when the screw-fastening mechanism 30 is released from the holder 20.

The torque detector 51b detects the torque values when controlling the motors X1-X6 for driving the arm body 11 as the forces applied to the robot arm 10. Thus, it becomes unnecessary to provide additional sensors, for example, for only detecting the forces applied to the robot arm 10 and, therefore, the configuration of the robot device 1 can be further simplified.

In addition, since the robot arm 10 and the screw-fastening mechanism 30 are controlled by the single controller 50, the control timings when controlling the robot arm 10 and the screw-fastening mechanism 30 can be synchronized and, thus, the robot device 1 can be controlled with more accuracy. On the other hand, for example, a controller for controlling the robot arm 10 and a controller for controlling the screw-fastening mechanism 30 may be provided separately, and these controllers may mutually be connected via a program logic controller (PLC). In this case, similar effects can be acquired by communalizing the motor controller 51a of the arm controller 51 and the drive controller 52a of the screw-fastening mechanism controller 52.

As described above, although one embodiment of the present disclosure has been described, the present disclosure is not limited to the above embodiment. For example, although the stop of the rotation of the screw 101 is detected based on the torque value when controlling the motor provided to the driver 31 by the drive controller 52a, the screw 101 being fastened to the predetermined position may be detected based on the position of the head of the screw 101 detected by the motor controller 51a, and the fastening of the screw 101 by the screw-fastening mechanism 30 may then be stopped.

Although the forces applied to the robot arm 10 are detected based on the torque values when controlling the motors X1-X6, additional force sensors may be provided to detect the forces applied to the robot arm 10, for example.

Although the screw-fastening mechanism 30 is detachably provided to the arm body 11 via the holder 20, the screw-fastening mechanism 30 may be directly or indirectly fixed to the arm body 11 without using the holder 20.

In the foregoing specification and specific embodiments of the present invention have been described. However, one of ordinary skill in the art appreciates that various modifications and changes can be made without departing from the scope of the present invention as set forth in the claims below. Accordingly and the specification and figures are to be regarded in an illustrative rather than a restrictive sense, and all such modifications are intended to be included within the scope of present invention. The benefits and advantages, solutions to problems, and any element(s) that may cause any benefit, advantage and or solution to occur or become more pronounced are not to be construed as a critical, required and or essential features or elements of any or all the claims. The invention is defined solely by the appended claims including any amendments made during the pendency of this application and all equivalents of those claims as issued.

## Claims

1. A robot device (1), comprising:
an arm body (10) having a screw-fastening mechanism (30);
a detector (50, 51b, 52b) for detecting a force applied to the arm body (10); and
a controller (50, 51a, 52a) for controlling the arm body (10) based on a detection result of the detector (50, 51b, 52b) at the time of a screw-fastening operation by the screw-fastening mechanism (30).

2. The robot device (1) of claim 1, wherein the screw-fastening mechanism (30) is detachably held by the arm body (10).

3. The robot device (1) of claim 1 or 2, wherein the controller (50, 52a) controls the screw-fastening mechanism (30) based on the detection result of the detector (50, 52b) at the time of the screw-fastening operation by the screw-fastening mechanism (30).

4. The robot device (1) of any one of claims 1 to 3, wherein the screw-fastening mechanism (30) is moved in an axial direction of a screw (101) only by a movement of the arm body (10), the screw (101) being fastened by the screw-fastening mechanism (30).

5. The robot device (1) of claim 3 or 4, wherein the controller (50, 51a, 52a) synchronously controls the arm body (10) and the screw-fastening mechanism (30).

6. A robot device (1), comprising:
an arm body (10) for performing a screw-fastening operation;
a detector (50, 51b, 52b) for detecting a force applied to the arm body (10); and
a controller (50, 51a, 52a) for controlling the arm body (10) based on a detection result of the detector (50, 51b, 52b) at the time of the screw-fastening operation.

7. The robot device (1) of claim 6, wherein the controller (50, 52a) has a function to control a screw-fastening mechanism (30) for performing the screw-fastening operation, based on the detection result of the detector (50, 52b) at the time of the screw-fastening operation.

8. The robot device (1) of claim 7, wherein the screw-fastening mechanism (30) is moved in an axial direction of a screw (101) only by a movement of the arm body (10), the screw (101) being fastened by the screw-fastening mechanism (30).

9. The robot device (1) of claims 7 or 8, wherein the controller (50, 51a, 52a) synchronously controls the arm body (10) and the screw-fastening mechanism (30).

10. The robot device (1) of any one of claims 1 to 9, wherein the force applied to the arm body (10) is a torque of a motor for driving the arm body (10).

## Amended claims

### Amended claims in accordance with Rule 137(2) EPC.

**1.** A robot device (1), comprising:
an arm body (10) for performing a screw-fastening operation;
a detector (50, 51b, 52b) for detecting a force applied to the arm body (10); and
a controller (50, 51a, 52a) for controlling the arm body (10) based on a detection result of the detector (50, 51b, 52b) at the time of the screw-fastening operation.

**2.** The robot device (1) of claim 1, wherein the controller (50, 52a) has a function to control a screw-fastening mechanism (30) for performing the screw-fastening operation, based on the detection result of the detector (50, 52b) at the time of the screw-fastening operation.

**3.** The robot device (1) of claim 2, wherein the screw-fastening mechanism (30) is moved in an axial direction of a screw (101) only by a movement of the arm body (10), the screw (101) being fastened by the screw-fastening mechanism (30).

**4.** The robot device (1) of claims 2 or 3, wherein the controller (50, 51a, 52a) synchronously controls the arm body (10) and the screw-fastening mechanism (30).

**5.** The robot device (1) of any one of claims 1 to 4, wherein the force applied to the arm body (10) is a torque of a motor for driving the arm body (10).

**6.** The robot device (1) of any of claims 1 and 5, wherein the arm body (10) has a screw-fastening mechanism (30) forperforming the screw-fastening operation.

**7.** The robot device (1) or claim 6, wherein the screw-fastening mechanism (30) is detachably held by the arm body (10).

**8.** The robot device (1) of claim 6 or 7, wherein the controller (50, 52a) controls the screw-fastening mechanism (30) based on the detection result of the detector (50, 52b) at the time of the screw-fastening operation by the screw-fastening mechanism (30).

**9.** The robot device (1) of any one of claims 6 to 8, wherein the screw-fastening mechanism (30) is moved in an axial direction of a screw (101) only by a movement of the arm body (10), the screw (101) being fastened by the screw-fastening mechanism (30).

**10.** The robot device (1) of claim 8 or 9, wherein the controller (50, 51a, 52a) synchronously controls the arm body (10) and the screw-fastening mechanism (30).
